# EUROPÄISCHE PATENTANMELDUNG

(11) **EP 1 278 076 A2**
(43) Veröffentlichungstag der Anmeldung: **22.01.2003**
(21) Anmeldenummer: 02012430.1
(22) Anmeldetag: 10.06.2002
(51) Int. Cl.: G01S 15/93, G01S 15/87

(54) **Abstandmesssystem**

(30) Priorität: 13.07.2001 DE 10134070
(71) Anmelder: Valeo Schalter und Sensoren GmbH, 74321 Bietigheim-Bissingen (DE)
(72) Erfinder: Hoffsommer, Klaus, 74321 Bietigheim (DE)
(74) Vertreter: Dreiss, Fuhlendorf, Steimle & Becker

(57) **Zusammenfassung**

Die Erfindung betrifft ein Abstandmesssystem, insbesondere für ein Fahrzeug, umfassend wenigstens zwei Ultraschallsensoren und eine mit den Ultraschallsensoren verbundene Steuereinheit.

Die Erfindung kennzeichnet sich dadurch, dass wenigstens ein Ultraschallsensor ober- und/oder unterhalb eines anderen Ultraschallsensors angeordnet ist, wobei die Steuereinheit aus den unterschiedlichen Laufzeiten der reflektierten Ultraschallsignalen der über- und/oder untereinander angeordneten Ultraschallsensoren die absolute oder relative Höhe eines sich in dem Erfassungsbereich des Abstandmesssystems befindenden Gegenstandes bestimmt.

## Beschreibung

Die Erfindung betrifft ein Abstandmesssystem, insbesondere für ein Fahrzeug, umfassend wenigstens zwei Ultraschallsensoren und eine mit den Ultraschallsensoren verbundene Steuereinheit. Das Abstandmesssystem erfasst hierbei den Abstand von in dem Erfassungsbereich der Ultraschallsensoren auftretenden Hindernissen durch Aussenden von Ultraschllimpulsen und Messen der Zeit bis zum Empfang eines reflektierten Echos. Derartige Abstandmesssysteme werden beispielsweise für Parkhilfesysteme für Fahrzeuge eingesetzt, wobei der von dem Abstandmesssystem gemessene Abstand zu einem Hindernis dem Fahrer angezeigt wird.

Das Abstandmesssystem soll hierbei nur solche Gegenstände anzeigen, die tatsächlich mit dem Fahrzeug kollidieren können. Die ausgesandten Ultraschallsignale werden allerdings auch anderen Gegenständen oder Objekten reflektiert, ohne dass die Gefahr besteht, dass das Fahrzeug mit derartigen Gegenständen kollidiert. Derartige Reflexionen treten insbesondere an ungünstigen Fahrbahnbelägen, wie beispielsweise Kies oder Schotter von Schotterstraßen auf.

Der vorliegenden Erfindung liegt deshalb die Aufgabe zugrunde, ein Abstandmesssystem vorzuschlagen, welches die genannten Nachteile des bekannten Standes der Technik nicht aufweist. Insbesondere soll bestimmt werden können, ob erfasste Gegenstände dazu geeignet sind, mit dem Fahrzeug zu kollidieren.

Diese Aufgabe wird mit einem Abstandmesssystem der eingangs beschriebenen Art erfindungsgemäß dadurch gelöst, dass wenigstens ein Ultraschallsensor ober- und/oder unterhalb eines anderen Ultraschallsensors angeordnet ist, wobei die Steuereinheit aus den unterschiedlichen Laufzeiten der reflektierten Ultraschallsignale der über- und/oder untereinander angeordneten Ultraschallsensoren die absolute oder relative Höhe eines sich in dem Erfassungsbereich des Abstandmesssystems befindenden Gegenstandes bestimmt.

Bei bekannten Abstandmesssystemen sind die Ultraschallsensoren regelmäßig entlang einer vorzugsweise horizontal verlaufenden Linie angeordnet. Dadurch ist eine zwei-dimensionale Positionsbestimmung eines in dem Erfassungsbereich vorhandenen Gegenstandes möglich, wenn die Reflexion eines Echos bei mindestens zwei Sensoren eintrifft. Die bekannten Systeme können deshalb lediglich den Abstand sowie die Rechts-Links-Position des Gegenstandes bestimmen. Nicht bestimmt werden kann, in welcher Höhe sich der Gegenstand befindet. Demnach können bekannte Abstandmesssysteme nicht unterscheiden, ob der erfasste Gegenstand sich in einer Höhe befindet, die zu keiner Kollision mit dem Fahrzeug führt, oder ob eine Kollisionsgefahr gegeben ist.

Aufgrund der erfindungsgemäßen Anordnung der Ultraschallsensoren kann neben der bekannten Rechts-Links-Positionsbestimmung des Gegenstandes zusätzlich eine Hoch-Nieder-Position des Gegenstandes bestimmt werden. Überschreitet die Höhe des Gegenstandes eine kritische Schwelle, so ist Kollisionsgefahr gegeben. Liegt der erfasste Gegenstand demgegenüber in einer für das Fahrzeug unkritischen Höhe, besteht also keine Kollisionsgefahr, so kann dies das Abstandmesssystem erkennen. Bei unkritschen Gegenständen handelt es sich beispielsweise um einen Kiesoder Schotterbelag einer Fahrbahn oder auch um in der Fahrbahn vorhandene Absätze oder Stufen geringer Höhe.

Bei einer vorteilhaften Ausführungsform der Erfindung ist vorgesehen, dass wenigstens zwei Ultraschallsensoren entlang einer Linie, insbesondere der horizontalen, angeordnet sind, und dass wenigstens ein Ultraschallsensor ober- und/oder unterhalb der Linie angeordnet ist. Mit einer derartigen Anordnung von Ultraschallsensoren ergibt sich eine vorteilhafte Rechts-Links- als auch Hoch-Tief-Positionserkennung von in dem Erfassungsbereich des Abstandmesssystems liegenden Gegenständen.

Eine vorteilhafte Anordnung ergibt sich insbesondere dann, wenn ein Ultraschallsensor senkrecht ober- und/oder unterhalb eines anderen Ultraschallsensors angeordnet ist.

Eine weitere Ausführungsform der Erfindung kennzeichnet sich dadurch, dass die Steuereinheit Reflexionen aus dem Bereich der Höhe des Untergrundes bzw. der Fahrbahnoberfläche erkennen kann. Damit wird gewährleistet, dass das Abstandmesssystem unterscheidet zwischen Gegenständen die zu einer unerwünschten Kollision des Fahrzeuges führen können und Gegenständen, die keine Gefahr darstellen.

Vorteilhafterweise ist ebenfalls denkbar, diejenigen Signale, die aus den in dem Bereich der Höhe der Fahrbahnoberfläche reflektierten Ultraschallsignalen resultieren bei einer weiteren Datenverarbeitung nicht weiter zu berücksichten. Damit wird ausgeschlossen, dass Gegenstände im Bereich der Höhe des Untergrundes bzw. der Fahrbahnoberfläche dem Fahrer des Fahrzeuges angezeigt werden.

Erfindungsgemäß kann auch vorgesehen sein, dass diejenigen Signale, die aus den in dem Bereich der Höhe der Fahrbahnoberfläche reflektierten Ultraschallsignalen resultieren bei einer weiteren Datenverarbeitung nur dann berücksichtigt werden, wenn eine vorgegebene Schwellenkurve überschritten wird. Dadurch werden von dem Abstandmesssystem nicht zur Kollision führende Gegenstände nur dann erfasst, wenn eine entsprechend starke Reflexion der Ultraschallsignale an ihnen auftritt. Je nach Qualität der Signale ist auch denkbar, dass sich die Schwellenkurve adaptiv an sich ändernde Fahrbahnoberflächen anpasst. Dies hat den Vorteil, dass beispielsweise nach vorgegebenen Zeitintervallen, eine Anpassung des Systems an sich ggf. ändernde Bodenverhältnisse erfolgt.

Die eingangs genannte Aufgabe wird außerdem durch ein Parkhilfesystem für Fahrzeuge mit einem im Vorhergehenden beschriebenen Abstandmesssystem gelöst. Das Parkhilfesystem umfasst neben dem Abstandmesssystem insbesondere Mittel zur Wiedergabe des von dem Abstandmesssystem erfassten Abstandes zu kollisionsgefährdeten Gegenständen.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeisspiele näher beschrieben und erläutert ist.

Es zeigen:
- Figur 1: ein an einem Fahrzeug angeordnetes erfindungsgemäßes Abstandmesssystem, wie es die Fahrbahnoberfläche erfasst;
- Figur 2: das Abstandmesssystem gemäß Figur 1, wie es ein kollisionsrelevantes Hindernis erfasst; und
- Figur 3: die Rückansicht des Fahrzeugs gem. Figur 1 und 2.

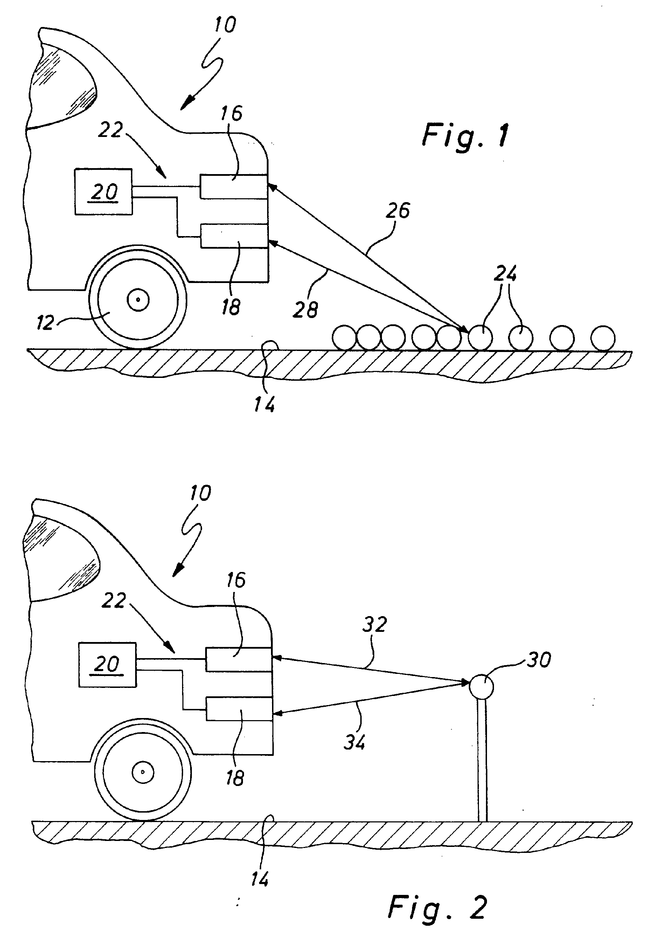

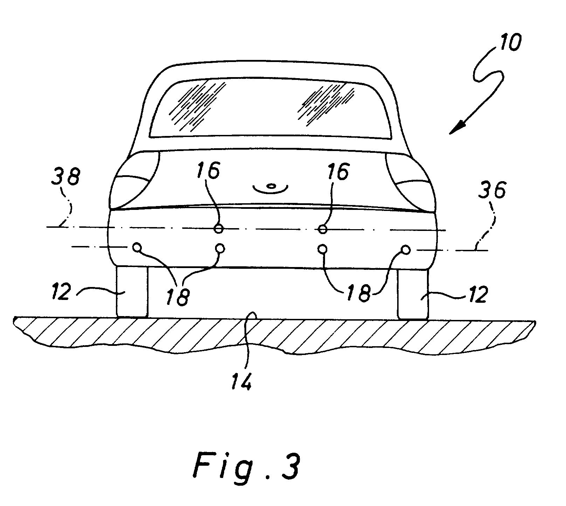

In der Figur 1 und 2 ist jeweils der Heckbereich eines Fahrzeuges 10 dargestellt. Ein Fahrzeughinterrad trägt die Bezugsziffer 12, die Fahrzeugbahn ist mit dem Bezugszeichen 14 gekennzeichnet. An dem Fahrzeugheck sind zwei vertikal übereinander angeordnete Ultraschallsensoren 16 und 18 dargestellt. Das Fahrzeugheck sieht vorteilhafterweise auf Höhe des Ultraschallsensors 18 weitere, entlang einer Linie 36 angeordnete Ultraschallsensoren 18 vor, die in Figur 3 deutlich zu erkennen sind. Auch auf der Höhe des Ultraschallsensors 16 sind insgesamt zwei Ultraschallsensoren 16 vorgesehen, die in einer Linie 38 liegen, die parallel zu der Linie 36 verläuft. Bei einer waagrechten Position des Fahrzeugs 10 liegt der Ultraschallsensor 16 vorteilhafterweise senkrecht über dem Ultraschallsensor 18.

Die Ultraschallsensoren 16 und 18 sind mit einer Steuereinheit 20 verbunden. Die Ultraschallsensoren 16 und 18 sowie die Steuereinheit 20 sind Teile eines Abstandmesssystems 22. Das Abstandmesssystem 22 ist wiederum Teil eines Parkhilfesystems, mit dem die von der Steuereinheit 20 ermittelten Daten dem Fahrzeuglenker angezeigt werden können.

In der Figur 1 sind auf der Fahrbahn 14 verschiedene Gegenstände 24, insbesondere Schotter oder kleine Steinchen, dargestellt. Über die unterschiedliche Laufzeit eines reflektierten Echos 26 und 28 zu den in verschiedener Höhe eingebauten Sensoren 16 und 18 kann mit der Steuereinheit 20 die vertikale Position der Gegenstände 24 errechnet werden. Die Laufzeit des Echos 26 ist aufgrund der größeren Distanz von dem reflektierten Gegenstand zu dem Ultraschallsensor 16 größer als die Laufzeit des Echos 28 von dem reflektierten Gegenstand 24 zu dem Ultraschallsensor 18.

Aufgrund der Bestimmung der vertikalen Höhe des in dem Erfassungsbereich des Abstandmesssystems 22 befindlichen Gegenstandes 24 kann unterschieden werden, ob der Gegenstand ein kollisionsrelevantes Hindernis ist. Im Falle der Figur 1 sind die Gegenstände 24 keine kollisionsrelevanten Hindernisse, das Fahrzeug kann demnach gefahrlos zurücksetzen.

In der Figur 2 ist auf der Fahrbahn 14 ein kollisionsrelevantes Hindernis 30 in Form eines Geländers oder Absperrpollers dargestellt. Die Laufzeit des reflektierten Echos 32 zwischen dem Ultraschallsensor 16 und dem Hindernis 30 entspricht im Wesentlichen der Laufzeit des Echos 34 zwischen dem Ultraschallsensor 18 und dem Hindernis 30. Daraus kann bestimmt werden, dass der Gegenstand 30 etwa auf der Höhe zwischen den beiden Ultraschallsensoren 16 und 18 liegt. Das Abstandmesssystem 22 ermittelt demnach ein Hindernis 30, das beim Zurücksetzen des Fahrzeugs 10 mit dem Fahrzeug 10 kollidiert.

Das Abstandmesssystem 22 kann derart funktionieren, dass die Sensoren 16 und 18 für Reflexionen aus dem Bereich der Oberfläche der Fahrbahn 14 unempfindlicher eingestellt werden. Denkbar ist auch, dass Reflexionen aus dem genannten Bereich komplett ignoriert werden.

Das erfindungsgemäße Abstandmesssystem hat demnach den Vorteil, dass nur diejenigen Gegenstände oder Objekte angezeigt werden, die tatsächlich mit dem Fahrzeug 10 kollidieren können. So können beispielsweise Gegenstände unberücksichtigt bleiben, die gegenüber der Oberfläche der Fahrbahn 14 eine Höhe von beispielsweise 7 bis 10 cm oder weniger aufweisen.

In der Figur 3 ist das Fahrzeug 10 in Rückansicht dargestellt. Deutlich zu erkennen sind vier Sensoren 18, die entlang der weitgehend horizontalen Linie 36 angeordnet sind. Senkrecht über den beiden mittleren Sensoren 18 sind zwei Sensoren 16 vorgesehen.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Abstandmesssystem (22), insbesondere für ein Fahrzeug (10), umfassend wenigstens zwei Ultraschallsensoren (16, 18) und eine mit den Ultraschallsensoren verbundene Steuereinheit (20), **dadurch gekennzeichnet, dass** wenigstens ein Ultraschallsensor (16) oberund/oder unterhalb eines anderen Ultraschallsensors (18) angeordnet ist, wobei die Steuereinheit (20) aus den unterschiedlichen Laufzeiten der reflektierten Ultraschallsignalen (26, 28, 32, 34) der überund/oder untereinander angeordneten Ultraschallsensoren (16, 18) die absolute oder relative Höhe eines sich in dem Erfassungsbereich des Abstandmesssystems (22) befindenden Gegenstandes (24, 30) bestimmt.

2. Abstandmesssystem (22) nach Anspruch 1, **dadurch gekennzeichnet, dass** wenigstens zwei Ultraschallsensoren (18) entlang einer Linie (36), insbesondere einer horizontalen Linie, angeordnet sind und dass wenigstens ein Ultraschallsensor (16) oberund/oder unterhalb dieser Linie (36) angeordnet ist.

3. Abstandmesssystem (22) nach Anspruch 1 oder 2, **dadurch gekennzeichnet, dass** ein Ultraschallsensor (16) senkrecht ober- und/oder unterhalb eines anderen Ultraschallsensors (18) angeordnet ist.

4. Abstandmesssystem (22) nach Anspruch 1, 2 oder 3, **dadurch gekennzeichnet, dass** die Steuereinheit (20) reflektierte Ultraschallsignale aus dem Bereich der Höhe der Fahrbahnoberfläche (14) erkennt.

5. Abstandmesssystem (22) nach Anspruch 4, **dadurch gekennzeichnet, dass** diejenigen Signale, die aus den in dem Bereich der Höhe der Fahrbahnoberfläche (14) reflektierten Ultraschallsignalen (26, 28, 32, 34) resultieren, bei einer weiteren Datenverarbeitung nicht weiter berücksichtigt werden.

6. Abstandmesssystem (22) nach Anspruch 4, **dadurch gekennzeichnet, dass** diejenigen Signale, die aus den in dem Bereich der Höhe der Fahrbahnoberfläche (14) reflektierten Ultraschallsignalen (26, 28, 32, 34) resultieren, bei einer weiteren Datenverarbeitung nur dann berücksichtigt werden, wenn eine vorgegebene Schwellenkurve überschritten wird.

7. Parkhilfesystem für Fahrzeuge (10) mit einem Abstandmesssystem (22) nach einem der vorhergehenden Ansprüche und mit Mitteln zur Wiedergabe des von dem Abstandmesssystem (22) erfassten Abstandes.
